# EUROPÄISCHE PATENTSCHRIFT

(11) **EP 2 874 729 B1**
(45) Veröffentlichungstag und Bekanntmachung des Hinweises auf die Patenterteilung: **02.11.2016**
(21) Anmeldenummer: 13739162.9
(22) Anmeldetag: 08.07.2013
(51) Int. Cl.: B01D 53/14, B01D 53/62, B01D 53/78

(54) **WASCHLÖSUNG ZUR ABSORPTION VON KOHLENDIOXID SOWIE VERFAHREN ZUR BESCHLEUNIGUNG DER ABSORPTION DURCH GERMANIUMDIOXID**
SCRUBBING SOLUTION FOR ABSORBING CARBON DIOXIDE AND METHOD FOR ACCELERATING THE ABSORPTION BY USING GERMANIUM DIOXIDE
SOLUTION DE LAVAGE POUR ABSORBER DU DIOXYDE DE CARBONE ET METHODE POUR ACCELERER L'ABSORPTION EN UTILISANT DU DIOXYDE DE GERMANIUM

(30) Priorität: 17.07.2012 DE 102012212482
(43) Veröffentlichungstag der Anmeldung: 27.05.2015
(73) Patentinhaber: Siemens Aktiengesellschaft, 80333 München (DE)
(72) Erfinder: KUETTEL, Diego, Andres, 34128 Kassel (DE); FISCHER, Björn, 40476 Düsseldorf (DE); JOH, Ralph, 63500 Seligenstadt (DE); KINZL, Markus, 63128 Dietzenbach (DE); SCHNEIDER, Rüdiger, 65817 Eppstein (DE)
(86) Internationale Anmeldenummer: PCT/EP2013/064345
(87) Internationale Veröffentlichungsnummer: WO 2014/012808

(56) Entgegenhaltungen:
- US-A- 3 790 503
- US-A1- 2011 059 845
- DATABASE WPI Week 200618 Thomson Scientific, London, GB; AN 2006-168255 XP002714413, & JP 2006 045456 A (TOYOBO KK) 16. Februar 2006 (2006-02-16)

## Beschreibung

Bei einer fossilbefeuerten Kraftwerksanlage zur Erzeugung elektrischer Energie entsteht durch die Verbrennung eines fossilen Brennstoffes ein insbesondere kohlendioxidhaltiges Rauchgas. Zu einer Verringerung der Emission von Kohlendioxid (CO₂) ist es als eine Sekundärmaßnahme bekannt, das Kohlendioxid mittels einer Rauchgaswäsche aus dem Rauchgas abzutrennen. Insbesondere ist die Methode der Absorption-Desorption gebräuchlich. In großtechnischem Maßstab wird dabei das Rauchgas in einem Absorber mit einer Waschlösung, die ein Absorptionsmittel enthält, in Kontakt gebracht, wobei das Kohlendioxid aus dem Rauchgas in die Waschlösung ausgewaschen wird (CO₂ Capture-Prozess). Das Kohlendioxid wird zunächst physikalisch in der Waschlösung gelöst und anschließend unter Beteiligung des Adsorptionsmittels chemisch absorbiert. Die mit Kohlendioxid beladene Waschlösung wird anschließend in einen Desorber verbracht, wobei unter Temperaturerhöhung das Kohlendioxid desorbiert und beispielsweise einer geeigneten Lagerung zugeführt werden kann. Hierbei wird das Absorptionsmittel regeneriert, so dass es zur erneuten Absorption wieder dem Absorber zugeführt werden kann.

Gängige Absorptionsmittel basieren insbesondere auf primären, sekundären oder tertiären Aminen oder einer Mischung daraus und zeigen eine gute Selektivität und eine hohe Kapazität für die Absorption von Kohlendioxid. In der chemischen Industrie wird hauptsächlich das primäre Amin MEA (Monoethanolamin) eingesetzt, welches eine schnelle Absorptionskinetik zeigt. Primäre Amine zeigen jedoch in einem Absorptions-Desorptionsprozess einen schlechten energetischen Wirkungsgrad, da eine vergleichsweise hohe Regenerationsenergie aufgebracht werden muss. Da der energetische Wirkungsgrad in der chemischen Industrie nicht im Mittelpunkt des Interesses steht, konnten hier bisher die energetischen Nachteile weitestgehend vernachlässigt werden. In Kraftwerken zur Stromerzeugung hingegen ist gerade der Energieverbrauch des CO₂ Capture-Prozesses von großer Bedeutung, da er aufgrund seiner Größe einen erheblichen Einfluss auf den Gesamtwirkungsgrad des Kraftwerks hat.

Zur Vermeidung des energetischen Nachteils werden daher zur Behandlung des Rauchgases eines Kraftwerks als Absorptionsmittel sterisch gehinderte Amine (hinsichtlich der Bikarbonatbildung), sekundäre oder tertiäre Amine, Aminosäuresalze und/oder Pottasche-Lösungen eingesetzt. Diese Absorptionsmittel zeigen deutlich verringerte Regenerationsenergien, was sich in einem geringeren Wirkungsgradeinbruch des Kraftwerks bemerkbar macht. Darüber hinaus zeigen sekundäre und tertiäre Amine gegenüber primären Aminen eine höhere Beladungskapazität für Kohlendioxid.

Ein Vorteil der primären Aminverbindungen hingegen ist die deutlich schnellere Absorptionskinetik. Dadurch lassen sich im Vergleich zu den sekundären Aminen oder Aminosäuresalzen die Kolonnen oder Reaktoren des Absorbers, in denen das Kohlendioxid absorbiert wird, kleiner auslegen, was zu geringeren Investitionskosten führt. Sterisch gehinderte, sekundäre oder tertiäre Amine oder Aminosäuresalze haben eine langsamere Reaktionskinetik, da sie instabile oder gar keine Carbamatprodukte bilden.

Der Vorteil von Aminosäuresalzen im Vergleich zu heterocyklischen Aminen oder Alkanolaminen wiederum ist, dass Aminosäuresalze keinen merklichen Dampfdruck aufweisen und somit nicht verdampfen und während des Abscheideprozesses in die Umwelt ausgetragen werden können. Heterocyklische Amine und Alkanolamine sind flüchtig und werden durch das in die Umwelt emittierende gereinigte Rauchgas mit ausgetragen, was zu unerwünschten Umweltbelastungen führt.

Eine Aufgabe der Erfindung ist es, eine möglichst umweltverträgliche Waschlösung für die Absorption von Kohlendioxid bereit zu stellen, die eine hohe Absorptionsgeschwindigkeit und gleichzeitig einen geringen Energieverbrauch bei der Regeneration aufweist. Eine weitere Aufgabe der Erfindung besteht in der Angabe eines Verfahrens zur Beschleunigung der Absorption von Kohlendioxid, wobei ein Kohlendioxid haltiges Gas mit einer Waschlösung, die ein Absorptionsmittel umfasst, unter Absorption von Kohlendioxid in Kontakt gebracht wird.

Die auf eine Waschlösung gerichtete Aufgabe der Erfindung wird gelöst durch eine Waschlösung umfassend ein Absorptionsmittel auf Basis von Aminen, oder Ethanolaminen, oder Aminosäuresalzen oder Pottasche oder einer Kombination hiervon und einen aktivierenden Zusatzstoff, wobei der aktivierende Zusatzstoff ein Germaniumdioxid ist.

Die Erfindung geht dabei in einem ersten Schritt von der Überlegung aus, dass die chemische Absorption des Kohlendioxids bereits in der Grenzschicht der Waschlösung zu dem Gas stattfindet, in der das Kohlendioxid zunächst physikalisch gelöst wird. Insofern beeinflusst die Reaktion der Absorption des Kohlendioxids das Konzentrationsprofil in der Grenzschicht. Die Absorptionskinetik insgesamt, also einschließlich des Schrittes der physikalischen Lösung, der der eigentlichen Absorption vorausgeht, wird demnach insbesondere von der Reaktionsgeschwindigkeit der chemischen Absorption als solcher beeinflusst. Eine Erhöhung der Reaktionsgeschwindigkeit führt damit zu einer Erhöhung der Aufnahmegeschwindigkeit für Kohlendioxid aus dem zu reinigenden Gas.

Durch die Zugabe eines Aktivators bzw. eines Hydratationskatalysators zu einem relativ langsam reagierenden Absorptionsmittel, wie z.B. den erwähnten sekundären oder tertiären Aminen, Aminosäuresalzen oder Pottasche, würde sich demnach die Absorption von gasförmigem Kohlendioxid durch die Waschlösung beschleunigen lassen, wobei zugleich deren energetische Vorteile hinsichtlich der Regeneration erhalten blieben.

Durch eigene Untersuchungen sind als derartige Aktivatoren beispielsweise Metalloxide mit Übergangsmetallen wie z.B. Vanadium, Molybdän, Wolfram oder Titan oder mit Halbmetallen wie z.B. Arsen oder Selen bekannt. Auch können Säuren von Arsen, Selen, Brom oder Phosphor als derartige Aktivatoren eingesetzt werden. Derartige Aktivatoren oder Katalysatoren beschleunigen zwar die Absorptionsreaktion mit gelöstem Kohlendioxid, werden jedoch als weitere teilweise toxische wirkende Zusätze in der Waschlösung beispielsweise von Kraftwerksbetreibern nicht akzeptiert.

In einem zweiten Schritt erkennt die Erfindung, dass auch durch den Einsatz von Germaniumdioxid die Absorptionsreaktion des Absorptionsmittels mit Kohlendioxid beschleunigt wird, wobei Germaniumdioxid jedoch den großen Vorteil hat, eine nicht toxische Verbindung zu sein. Durch den Einsatz von Germaniumdioxid in der alkalischen Rauchgaswäsche zur Absorption von Kohlendioxid wird es somit möglich, mit einem nicht giftigen Zusatz hinsichtlich ihrer Absorptionskinetik langsame Absorptionsmittel wie sekundäre oder tertiäre Amine, Aminosäuresalze oder Pottasche einzusetzen und zugleich deren energetischen Vorteil hinsichtlich der niedrigen Regenerationsenergie zu nutzen. Durch den Zusatz Germaniumdioxid wird die Absorptionsreaktion beschleunigt, so dass insgesamt die Aufnahmegeschwindigkeit für Kohlendioxid aus dem zu reinigenden Abgas erhöht wird.

Durch die insgesamt erzielte Steigerung der Aufnahmegeschwindigkeit für Kohlendioxid kann die Absorptionskolonne kleiner ausgelegt werden, wodurch die Investitionskosten für eine CO₂ Capture-Anlage gesenkt werden können.

Der Erfindung liegt dabei insbesondere auch die Erkenntnis zu Grunde, dass bereits kleine Mengen eines anorganischen Aktivators ausreichen, um die Absorption von Kohlendioxid erheblich zu beschleunigen.

Da der Aktivator Germaniumdioxid in nur sehr kleinen Mengen zugesetzt wird, ist hierdurch auch nicht mit einer Erhöhung der Regenerationsenergie zu rechnen. Diese kann sogar durch die Zugabe des aktivierenden Zusatzstoffes weiter reduziert werden, da eine entsprechend höhere Beladung im Absorber erreicht wird und die treibende Kraft aufgrund der erhöhten Partialdruckdifferenz im Desorber zunimmt. Somit ergeben sich sowohl Einsparungen in der Auslegung des Absorbers aufgrund der erhöhten Absorptionsgeschwindigkeit, als auch Einsparungen bei der erforderlichen Regenerationsenergie.

Als vorteilhaft hat sich ein Anteil des Germaniumdioxids in der Waschflüssigkeit von 0,01 bis 10 Gewichtsprozent erwiesen. Die Menge an Germaniumdioxid ist jedoch möglichst gering zu halten, um mögliche negative Einflüsse eines anorganischen Katalysators auf die Waschlösung zu minimieren. Besonders vorteilhaft hat sich daher ein Anteil an Germaniumdioxid von 0,05 bis 2 Gewichtsprozent erwiesen. Grundsätzlich gilt es dabei zu beachten, dass anorganische Katalysatoren nicht an der CO₂ Absorption teilnehmen. Sie katalysieren insbesondere die Carbamat-Wasser-Reaktion (Hydratation) und bilden dabei Bikarbonat. Der Anteil des Katalysators in der Waschlösung ist daher so zu wählen, dass ein möglichst optimiertes Verhältnis der Anteile zwischen Germaniumdioxid und Absorptionsmittel in der Waschlösung erzielt wird.

Als Absorptionsmittel eignen sich insbesondere sterisch gehinderte, sekundäre oder tertiäre Amine und Aminosäuresalze oder eine Mischung aus diesen. Hierdurch wird gewissermaßen der energetische Vorteil bei der Regeneration mit der beschleunigten Absorptionskinetik (durch die Zugabe an Germaniumdioxid) voll ausgeschöpft. Der Wirkungsgradverlust eines Kraftwerks durch Hinzuschalten einer Abscheideanlage für Kohlendioxid wird minimiert.

Die Waschlösung liegt vorteilhafterweise als eine wässrige Lösung vor.

Für die eingesetzten Aminosäuresalze eignen sich Aminosäuren, die insbesondere von Sarkosin, N,N-dimethylalanin, Taurin, alpha-Alanin, beta-Alanin, N-methylalanin, Prolin, Homotaurin oder Glycin stammen.

Die auf ein Verfahren gerichtete Aufgabe wird erfindungsgemäß gelöst durch ein Verfahren zur Beschleunigung der Absorption von Kohlendioxid, wobei ein Kohlendioxid haltiges Gas mit einer Waschlösung, die ein Absorptionsmittel auf Basis von Aminen, oder Ethanolaminen, oder Aminosäuresalzen, oder Pottasche, oder einer Kombination, sowie ein Germaniumdioxid umfasst, unter Absorption von Kohlendioxid in Kontakt gebracht wird, wobei das Kohlendioxid in der Waschlösung physikalisch gelöst und unter Beteiligung des Absorptionsmittels chemisch absorbiert wird, und wobei das Germaniumdioxid für wenigstens einen Reaktionsschritt der chemischen Absorption des Kohlendioxids katalytisch wirkt.

Bevorzugt wird der Anteil des Germaniumdioxids dabei in der Waschlösung auf 0,01 bis 10 Gewichtsprozent eingestellt. Besonderes bevorzugt beträgt der Anteil an Germaniumdioxid 0,05 bis 2 Gewichtsprozent.

Als Absorptionsmittel sind vorteilhafterweise sterisch gehinderte, sekundäre oder tertiäte Amine und/oder Aminosäuresalze umfasst.

In einer bevorzugten Alternative wird als Kohledioxid haltiges Gas das Rauchgas eines fossil befeuerten Dampfkraftwerks, einer Gasturbinenanlage oder einer kombinierten Gas- und Dampfturbinenanlage behandelt.

Nachfolgend werden Ausführungsbeispiele der Erfindung anhand einer Zeichnung näher erläutert. Darin zeigt:
- FIG 1: ein Diagramm mit einem Vergleich unterschiedlicher Waschlösungen,
- FIG 2: in einem Diagramm zwei Messkurven zum Druckabfall für Kohlendioxid über unterschiedlichen Waschlösungen,
- FIG 3: ein Reaktionsschaubild der Reaktion von CO₂ mit einem sekundären Aminosäuresalz,
- FIG 4: ein Reaktionsschaubild der Reaktion von CO₂ mit einem sekundären Aminosäuresalz, katalysiert mit Germaniumdioxid,
- FIG 5: die chemische Struktur von Pottasche als ein Beispiel für ein Absorptionsmittel und
- FIG 6: die chemische Struktur eines Aminosäuresalzes als ein Beispiel für ein Absorptionsmittel.

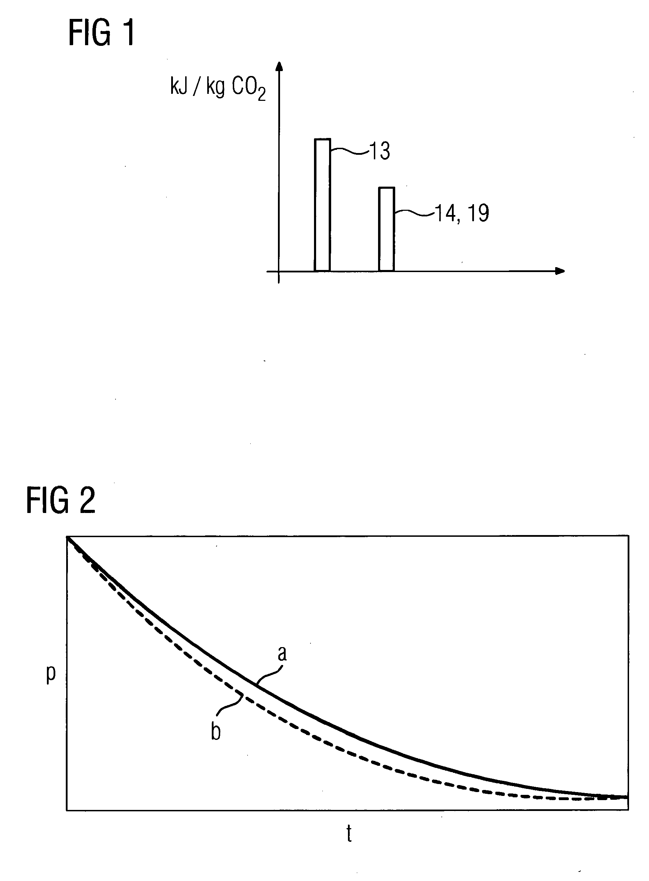

Das in FIG 1 dargestellte Diagramm zeigt die für die Abtrennung von Kohlendioxid aus einem Rauchgas einer Kraftwerksanlage erforderliche spezifische Energie in kJ pro abgetrenntem kg CO₂. Die Achse ist nicht skaliert, weil die erforderliche Energie im Wesentlichen auch abhängig ist von anderen Prozessparametern, wie Druck, Temperatur, Umpumpvolumen, Rauchgasmassenstrom usw., auf die hier aber nicht näher eingegangen werden soll.

Die Balken stehen für unterschiedliche Waschlösungen 13 und 14. Der linke Balken zeigt eine Waschlösung 13 mit einem sekundären Aminosäuresalz als Absorptionsmittel. Der rechte Balken zeigt eine Waschlösung 14 mit einem sekundärem Aminosäuresalz und einem Anteil an Germaniumdioxid als aktivierenden Zusatzstoff. Das Verhältnis bei der Waschlösung 14 zwischen sekundärem Aminosäuresalz und Germaniumdioxod beträgt in diesem Beispiel in Gewichtsprozenten 99,5:0,5. Dargestellt ist die spezifisch erforderliche Leistung, die zum Abtrennen von CO₂ aus einem Rauchgas erforderlich ist. Dabei wird hier unterstellt, dass sich außer der verwendeten Waschlösung kein weiterer Prozessparameter ändert.

Zu erkennen ist, dass die Waschlösung 14 im Vergleich zu der Waschlösung 13 wesentlich weniger spezifische Energie benötigt. Das bedeutet, bei gleichbleibender Kolonnengröße zeigt die mit Germaniumdioxid aktivierte Waschlösung 14 eine wesentliche geringere erforderliche spezifische Energie.

FIG 2 zeigt in einer geschlossenen Ruhrzelle bei einer Temperatur von 45 °C den Druckabfall über die Zeit über einer untersuchten Waschlösung nach einer Zugabe von 2,5 bar Kohlendioxid. Die obere Kurve a) entspricht einer verwendeten wässrigen Waschlösung mit 30 Gewichtsprozent an einem Aminosäuresalz. Die untere Kurve b) entspricht dem Verlauf, wenn derselben Waschlösung zusätzlich 0,3 Gewichtsprozent an Germaniumdioxid beigefügt wurden.

Man erkennt deutlich die raschere Aufnahme von gasförmigem Kohlendioxid im Falle der Verwendung von Germaniumdioxid. Bei gleicher Aufnahmekapazität können somit die Absorber einer Absorptionsanlage für Kohlendioxid kleiner ausgelegt werden, wenn der Waschlösung Germaniumdioxid als aktivierender Zusatzstoff beigegeben wird.

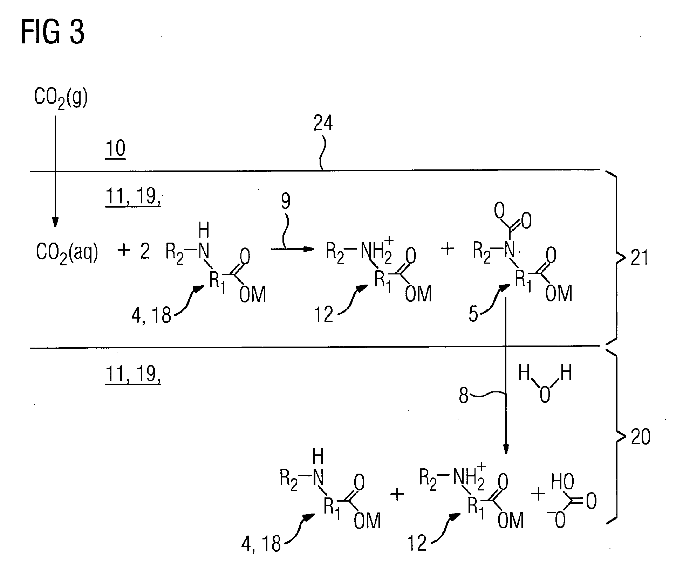

FIG 3 zeigt ein Reaktionsschaubild mit dem Übergang von CO₂ aus der Gasphase 10 in die Grenzschicht 21 der Flüssigphase 11. Der Übergang aus der Gasphase 10 in die Grenzschicht 21 ist durch die Grenzfläche 24 gegeben. In der Grenzschicht 21 reagiert das CO₂ mit einem sekundären Aminosäuresalz 4 als Absorptionsmittel 18 über eine schnelle Reaktion 9 zu dem Reaktionsprodukt Carbamat 5 und protoniertem Aminosäuresalz 12.

Die nachfolgende Reaktion, bei der das Reaktionsprodukt weiter mit Wasser zu Bikarbonat und weiterer Reaktionsprodukte reagiert, ist aber eine langsame Reaktion 8, da sie bereits im Flüssigkeitskern 20 der Waschlösung 19 erfolgt, wo sie sterisch gehindert ist, und deutlich langsamer abläuft, als die Carbamatbildung in der Grenzschicht 21.

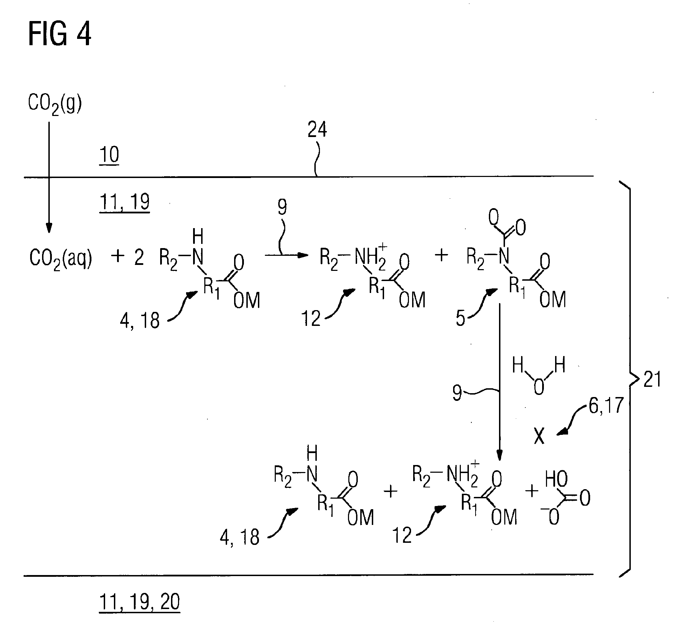

Im Vergleich zu FIG 3 zeigt FIG 4 ein Reaktionsschaubild wobei in der Waschlösung 19 neben dem sekundären Aminosäuresalz 7 als Absorptionsmittel 18 als aktivierender Zusatzstoff 6 ein Germaniumdioxid 17 enthalten ist. Gezeigt ist die Gasphase 10 und die Flüssigphase 11. Die Flüssigphase 11 unterteilt sich dabei in die Grenzschicht 21, die an die Gasphase 10 angrenzt, und den Flüssigkeitskern 20, der an die Grenzschicht 21 anschließt.

Das Germaniumdioxid bewirkt, dass die Bikarbonatbildung als schnelle Reaktion 9 abläuft. Die Bikarbonatbildung findet dabei in der Grenzschicht 21 der Flüssigphase 11, und nicht im Flüssigkeitskern 20 statt, weshalb die Bikarbonatbildung beschleunigt abläuft. Durch die schnellere Bikarbonatbildung gelangt auch das CO₂ aus der Gasphase 10 schneller in die Flüssigphase 11.

Bezogen auf die Erfindung ist lediglich ein geringer Zusatz an Germaniumdioxid notwendig, um bereits eine erhebliche Beschleunigung des CO₂ Capture-Prozesses zu erreichen. Vorteilhaft hat sich ein Anteil von weniger als 10 Gewichtsprozent erwiesen.

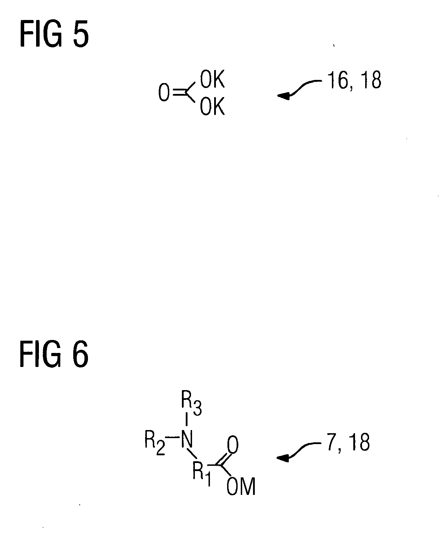

FIG 5 zeigt ein Beispiel für ein Absorptionsmittel 18. Dargestellt ist die chemische Strukturformel von Kaliumkarbonat, umgangssprachlich auch Pottasche 16 genannt.

FIG 6 zeigt ein weiteres Beispiel für ein Absorptionsmittel 18. Dargestellt ist die chemische Strukturformel einer allgemeinen Form eines Aminosäuresalzes 7, wobei 0 für Sauerstoff, N für Stickstoff, M für Alkalimetalle oder Erdalkalimetalle und R für einen Restsubstituenten steht. Die Restsubstituenten R1, R2 und R3 können hier für Wasserstoff H, für einen Alkyl-Rest, einen Aryl-Rest, einen Alkylaryl-Rest, einen Heteroaryl-Rest, ein Halogen, CN oder R-COO- stehen.

Aminosäuresalze 7 eignen sich besonders vorteilhaft als Absorptionsmittel, da sie keinen merklichen Dampfdruck haben, und somit beim CO₂ Capture Prozess bei der Absorption nicht mit dem Rauchgas in die Atmosphäre ausgetragen werden können.

## Patentansprüche

1. Waschlösung (19) umfassend ein Absorptionsmittel (18) für Kohlendioxid auf Basis von Aminosäuresalzen und einen die Absorptionsgeschwindigkeit aktivierenden Zusatzstoff (6), wobei der aktivierende Zusatzstoff (6) Germaniumdioxid (17) ist.

2. Waschlösung (19) nach Anspruch 1, wobei der Anteil des Germaniumdioxids (17) zwischen 0,01 und 10 Gewichtsprozent beträgt.

3. Waschlösung (19) nach Anspruch 1 oder 2, wobei der Anteil des Germaniumdioxids (17) zwischen 0,05 und 2 Gewichtsprozent beträgt.

4. Waschlösung (19) nach einem der vorhergehenden Ansprüche, wobei das Absorptionsmittel (18) sterisch gehinderte, sekundäre oder tertiäre Amine und/oder Aminosäuresalze umfasst.

5. Waschlösung (19) nach einem der vorhergehenden Ansprüche, welche als wässrige Lösung vorliegt.

6. Verfahren zur Beschleunigung der Absorption von Kohlendioxid, wobei ein Kohlendioxid haltiges Gas mit einer Waschlösung (19), die ein Absorptionsmittel (18) auf Basis von Aminen, oder Ethanolaminen, oder Aminosäuresalzen, oder Pottasche, oder einer Kombination, sowie Germaniumdioxid (17) umfasst, unter Absorption von Kohlendioxid in Kontakt gebracht wird, wobei das Kohlendioxid in der Waschlösung (19) physikalisch gelöst und unter Beteiligung des Absorptionsmittels (18) chemisch absorbiert wird, und wobei das Germaniumdioxid (17) für wenigstens einen Reaktionsschritt der chemischen Absorption des Kohlendioxids katalytisch wirkt.

7. Verfahren nach Anspruch 6, wobei das Germaniumdioxid (17) in der Waschflüssigkeit (19) auf einen Anteil von 0,01 bis 10 Gewichtsprozent eingestellt wird.

8. Verfahren nach Anspruch 7, wobei der Anteil des Germaniumdioxids (17) zwischen 0,05 und 2 Gewichtsprozent eingestellt wird.

9. Verfahren nach einem der Ansprüche 6 bis 8, wobei das Absorptionsmittel (18) sterisch gehinderte, sekundäre oder tertiäre Amine und/oder Aminosäuresalze umfasst.

10. Verfahren nach einem der Ansprüche 6 bis 9, wobei als Kohlendioxid haltiges Gas das Rauchgas eines fossil befeuerten Dampfkraftwerks, einer Gasturbinenanlage, oder einer kombinierten Gas- und Dampfturbinenanlage behandelt wird.

## Claims

1. Scrubbing solution (19) comprising an absorbent (18) for carbon dioxide on the basis of amino acid salts, and an absorption rate activator additive (6), wherein the activator additive (6) is germanium dioxide (17).

2. Scrubbing solution (19) according to Claim 1 wherein the proportion of germanium dioxide (17) is between 0.01 and 10 weight percent.

3. Scrubbing solution (19) according to Claim 1 or 2 wherein the proportion of germanium dioxide (17) is between 0.05 and 2 weight percent.

4. Scrubbing solution (19) according to any preceding claim, wherein the absorbent (18) comprises sterically hindered, secondary or tertiary amines and/or amino acid salts.

5. Scrubbing solution (19) according to any preceding claim, in the form of an aqueous solution.

6. Method for accelerating the absorption of carbon dioxide, wherein a gas comprising carbon dioxide is contacted with a scrubbing solution (19) comprising an absorbent (18) based on amines, or ethanolamines, or amino acid salts, or potash, or a combination, and also germanium dioxide (17), with absorption of carbon dioxide, wherein the carbon dioxide is physically dissolved in the scrubbing solution (19) and chemically absorbed by the absorbent (18), and wherein the germanium dioxide is catalytically active for at least one reaction step of the chemical absorption of carbon dioxide.

7. Method according to Claim 6 wherein the germanium dioxide (17) is adjusted in the scrubbing liquid (19) to a proportion of 0.01 to 10 weight percent.

8. Method according to Claim 7 wherein the proportion of germanium dioxide (17) is adjusted between 0.05 and 2 weight percent.

9. Method according to any of Claims 6 to 8 wherein the absorbent (18) comprises sterically hindered, secondary or tertiary amines and/or amino acid salts.

10. Method according to any of Claims 6 to 9 wherein the gas which is treated as comprising carbon dioxide is the flue gas of a fossil fuel steam power plant, of a gas turbine plant or of a combined gas and steam turbine plant.

## Revendications

1. Solution (19) de lavage comprenant un agent (18) absorbant du dioxyde de carbone à base de sels d'acides aminés et un additif (6) activant la vitesse d'absorption, l'additif (6) activant étant du dioxyde de germanium (17).

2. Solution (19) de lavage suivant la revendication 1, dans laquelle la proportion du dioxyde de germanium (17) est comprise entre 0,01 et 10 pour cent en poids.

3. Solution (19) de lavage suivant la revendication 1 ou 2, dans laquelle la proportion du dioxyde de germanium (17) est comprise entre 0,05 et 2 pour cent en poids.

4. Solution (19) de lavage suivant l'une des revendications précédentes, dans laquelle l'agent (18) absorbant comprend des amines secondaires ou tertiaires et/ou des sels d'acides aminés à empêchement stérique.

5. Solution (19) de lavage suivant l'une des revendications précédentes qui se présente sous la forme d'une solution aqueuse.

6. Procédé d'accélération de l'absorption du dioxyde de carbone, un gaz contenant du dioxyde de carbone étant mis en contact, avec absorption du dioxyde de carbone, avec une solution (19) de lavage qui comprend un agent (18) absorbant à base d'amines ou d'éthanol amines ou de sels d'acides aminés ou de carbonate de potassium ou une combinaison, ainsi que du dioxyde de germanium (17), le dioxyde de carbone étant dissout physiquement dans la solution (19) de lavage et étant absorbé chimiquement avec participation de l'agent (18) absorbant et le dioxyde de germanium (17) agissant catalytiquement pour au moins un stade réactionnel de l'absorption chimique du dioxyde de carbone.

7. Procédé suivant la revendication 6, dans lequel on règle le dioxyde de germanium (17) dans le liquide (19) de lavage à une proportion allant de 0,01 à 10 pour cent en poids.

8. Procédé suivant la revendication 7, dans lequel on règle la proportion du dioxyde de germanium (17) entre 0,05 et 2 pour cent en poids.

9. Procédé suivant l'une des revendications 6 à 8, dans lequel l'agent (18) absorbant comprend des amines secondaires ou tertiaires et/ou des sels d'acides aminés à empêchement stérique.

10. Procédé suivant l'une des revendications 6 à 9, dans lequel on traite comme gaz contenant du dioxyde de carbone le gaz de fumée d'une centrale électrique à vapeur alimentée en combustible fossile d'une installation de turbines à gaz ou d'une installation combinée de turbines à gaz et de turbines à vapeur.
